# EUROPEAN PATENT APPLICATION

(11) **EP 1 359 089 A2**
(43) Date of publication of application: **05.11.2003**
(21) Application number: 03252389.6
(22) Date of filing: 15.04.2003
(51) Int. Cl.: B63B 5/24

(54) **Multi-beam panel structures**

(30) Priority: 23.04.2002 GB 0209202
(71) Applicant: Duncan Research and Development Limited, Totnes, Devon TQ9 7RZ (GB)
(72) Inventor: Duncan, David Alexander, Devon TQ9 7RZ (GB)
(74) Representative: Craske, Stephen Allan

(57) **Abstract**

A fabricated panel structure such as a boat hull includes a plurality of elongate flexible cores 10 of a low strength foam material which are each individually covered by a respective strip 20 of fibrous material wrapped around each core in a spiral fashion. The covered members are arranged side-by-side sandwiched between inner and outer layers 24 and 26 of fibre-reinforced plastics material which are bonded to the cores.

## Description

### TECHNICAL FIELD OF THE INVENTION

This invention relates to the fabrication of shaped panel structures such as boat hulls using a multi-beam panel construction.

### BACKGROUND

It is known to fabricate shaped structures such as boat hulls from sheets of foamed plastics material sandwiched between inner and outer layers of fibre-reinforced plastics. Such a structure is considerably stronger and stiffer than a simple reinforced resin panel, but there may be a problem of insufficient bonding between the inner and outer skins resulting in structural delamination, particularly when the panels are subject to high levels of stress as encountered in the hull of a power boat for example. Various ways of strengthening the structure have been proposed, including the use of lengths of foam with interlocking edges and incorporating strengthening elements, but these often make it more difficult to form complex shapes such as a boat hull.

For a vertically loaded beam the most economical form of cross section (the section requiring the least amount of material for a given strength or stiffness) is an "I" section. For both vertical and horizontal loads it is a hollow box section.

The present invention seeks to provide a new and inventive fabrication system which offers improved structural integrity whilst at the same time allowing curved shapes to be formed without complicating the construction process or, significantly increasing fabrication time.

### SUMMARY OF THE INVENTION

The present invention provides a method of fabricating a structure such as a boat hull which includes individually covering a plurality of elongate flexible members with respective layers of fibrous material, arranging the covered members side-by-side, and applying further layers of fibre-reinforced plastics material to opposite surfaces of the covered members to bond them together.

The method effectively creates a series of I-beam or hollow box sections side-by-side, providing a panel with the most economical form of cross-section.

The invention also provides a fabricated structure such as a boat hull which includes a plurality of elongate flexible members each individually covered by a respective layer of fibrous material, the covered members being arranged side-by-side sandwiched between layers of fibre-reinforced plastics material which are bonded to the covered members to hold them together.

The fibrous material wrapped around the elongate members is preferably in the form of a continuous strip which is applied at an angle to the longitudinal direction of the respective member.

Preferably adjacent members are arranged such that their strips are disposed transverse to each other.

The elongate flexible members are preferably formed of a cellular material such as polyurethane foam.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general view of a structural member as used in the invention;
Figure 2 is a plan view of a number of such structural members arranged side-by-side in the construction of a panel in accordance with the invention;
Figure 3 is a transverse section through a completed panel; and
Figure 4 is a similar transverse section through a curved panel forming part of a boat hull.

### DETAILED DESCRIPTION OF THE DRAWINGS

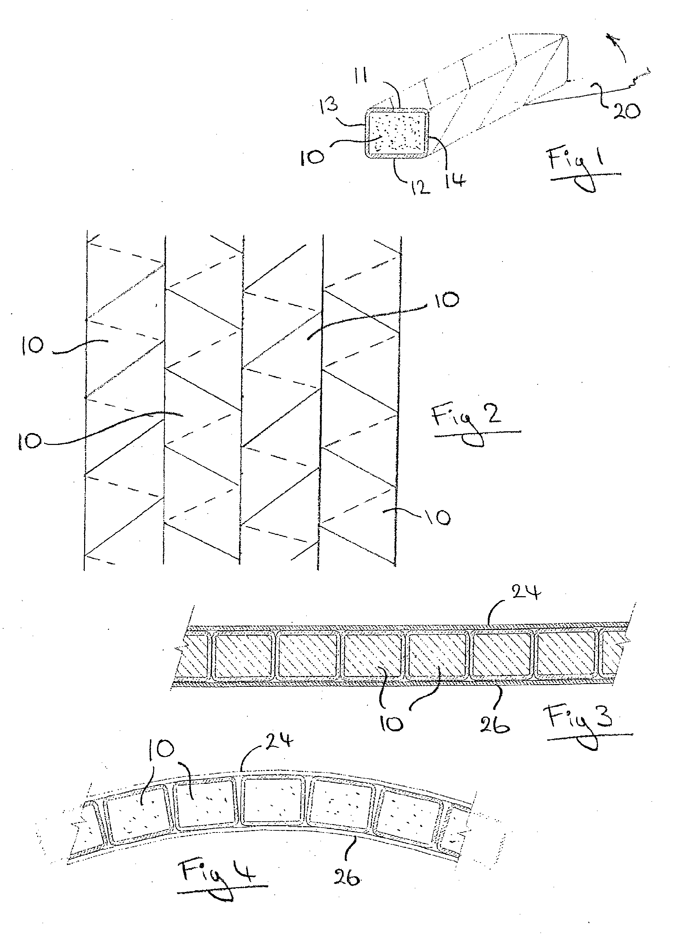

**Fig. 1** shows an elongate flexible core member 10 which is suitable for use as a basic structural element for the fabrication of a wide range of shaped panels. The core member is conveniently of a plain substantially rectangular cross-section as shown with opposite inner and outer faces 11 and 12 and perpendicular side faces 13 and 14. However, it should be noted that other suitable cross-sectional shapes could be used, particularly when forming curved panels for example. The core may be formed of a lightweight flexible and buoyant cellular material such as polyurethane foam, but the invention allows inexpensive cellular materials to be used such as expanded polystyrene. A strip 20 of fibrous material is wrapped around the core in a spiral fashion with the strip disposed at an angle to the longitudinal direction of the core so that the top, bottom and side faces of the core are substantially covered by at least one thickness of the strip 12 throughout their length. It should be noted that the angle of the spiral wrapping to the longitudinal direction of the core is opposite on opposing faces of the core, as indicated by the dashed lines in **Fig. 2**. The strip 20 may include glass fibres, although other fibrous materials could be used including natural and synthetic fibres. The fibres may be randomly distributed or regularly arranged as in a woven fabric. The covering strips can be dry wrapped and held in place by means of an adhesive, by staples, pins etc. They could also be impregnated with resin and cured. A number of such fibre-covered cores 10 are arranged side-by-side with their side faces abutting as shown in **Fig. 2**.

As shown in **Fig. 3**, the opposite inner and outer faces 11 and 12 of the wrapped cores 10 are covered with respective inner and outer skins 24 and 26 of fibre-reinforced plastics material such as glass fibres impregnated with a curable resin (GRP). A resin or other bonding agent may be applied to the strips 20 before or after assembly to form a strong bond with the inner and outer skins. The opposing strips 20 covering the opposing side faces 13 and 14 of the cores form strong cross-braced struts between the inner and outer skins effectively creating a series of adjacent I-beam or hollow box sections. Thus, although the panel is very lightweight its structural strength is extremely high, even if low strength core materials are used.

As shown in **Fig. 4**, the panel can readily be formed with a curved shape (transversely and/or longitudinally of the cores 10) such as may be necessary for the fabrication of a boat hull. The fabric-covered cores 10 are applied around formers or placed in a mould in a known manner to attain the required shapes and relative positions.

It will be appreciated that the features disclosed herein may be present in any feasible combination. Whilst the above description lays emphasis on those areas which, in combination, are believed to be new, protection is claimed for any inventive combination of the features disclosed herein.

## Claims

1. A method of fabricating a structure such as a boat hull which includes individually covering a plurality of elongate flexible members with respective layers of fibrous material, arranging the covered members side-by-side, and applying further layers of fibre-reinforced plastics material to opposite surfaces of the covered members to bond them together.

2. A method according to Claim 1, in which the fibrous material is wrapped around the elongate members in the form of a continuous strip which is applied at an angle to the longitudinal direction of the respective member.

3. A method according to Claim 1 or 2, in which the elongate flexible members are formed of a cellular material.

4. A fabricated structure such as a boat hull which includes a plurality of elongate flexible members each individually covered by a respective layer of fibrous material, the covered members being arranged side-by-side sandwiched between layers of fibre-reinforced plastics material which are bonded to the covered members to hold them together.

5. A fabricated structure according to Claim 4, in which the fibrous material is wrapped around the elongate members in the form of a continuous strip which is applied at an angle to the longitudinal direction of the respective member.

6. A fabricated structure according to any of Claims 4 or 5, in which the elongate flexible members are formed of a cellular material.

7. A method of fabricating a structure such as a boat hull which is substantially as described with reference to the drawings.

8. A fabricated structure such as a boat hull which is substantially as described with reference to the drawings
